(19) **Europäisches Patentamt**

**European Patent Office**

**Office européen des brevets**

(11) **EP 1 216 399 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(51) Int Cl.[7]: **G01G 11/04**

(21) Anmeldenummer: **00967773.3**

(86) Internationale Anmeldenummer:
**PCT/EP2000/009345**

(22) Anmeldetag: **25.09.2000**

(87) Internationale Veröffentlichungsnummer:
**WO 2001/025732 (12.04.2001 Gazette 2001/15)**

(54) **MESSEN VON SCHÜTTGUTSTRÖMEN MIT INFLUENZELEKTRODENPAAR**

MEASURING STREAMS OF BULK MATERIALS WITH A PAIR OF INFLUENCE ELECTRODES

MESURE DU FLUX DE MATIERE EN VRAC AVEC UN COUPLE D'ELECTRODES D'INFLUENCE

(84) Benannte Vertragsstaaten:
**BE DE ES FR GB IT**

(30) Priorität: **01.10.1999 DE 19947394**

(43) Veröffentlichungstag der Anmeldung:
**26.06.2002 Patentblatt 2002/26**

(73) Patentinhaber:
• **Dybeck, Klaus**
**21423 Winsen/Luhe (DE)**
• **Nagel, Rolf**
**22589 Hamburg (DE)**

(72) Erfinder:
• **Dybeck, Klaus**
**21423 Winsen/Luhe (DE)**
• **Nagel, Rolf**
**22589 Hamburg (DE)**

(74) Vertreter: **Hertz, Oliver, Dr.**
**v. Bezold & Sozien,**
**Akademiestrasse 7**
**80799 München (DE)**

(56) Entgegenhaltungen:
**DE-A- 2 950 925        DE-A- 4 406 046**
**DE-A- 19 745 121**

EP 1 216 399 B1

**Beschreibung**

Die Erfindung betrifft ein Verfahren zum Messen von Schüttgutströmen durch simultane Geschwindigkeits- und Massenmessungen. Die Erfindung betrifft insbesondere ein Verfahren zum kontinuierlichen Erfassen der Durchflußmenge von fließfähigem Schüttgut, wie z.B. von Granulaten oder pulverförmigen Feststoffen, beim Schüttguttransport, wie z.B. ein Verfahren zur Erfassung der Austragsmenge an Gut aus einem Vorratsbehälter oder der Beladung eines Schüttgutransporters. Die Erfindung betrifft auch eine entsprechende Einrichtung sowie eine entsprechende Wägerutsche.

Es ist bekannt, Schüttgutströme unter Verwendung von Prallplatten oder Meßschurren zu erfassen (siehe z.B. DE-OS 29 50 925). Das zu messende Gut stößt gegen eine schräg zur Fallrichtung des Gutes orientierte Platte. Der Massendurchsatz ergibt sich aus der Multiplikation der an der Prallplatte gemessenen Kraft mit einem Kalibrierungsfaktor. Diese Verfahrensweise ist wegen der relativ großen Meßungenauigkeiten und wegen der erforderlichen Kalibrierung nachteilig. Die Meßungenauigkeiten ergeben sich insbesondere bei Schwankungen der Schüttgutcharakteristika, beispielsweise in Bezug auf die Korngrößen, -formen, -gewichte und -härten, des Aufprallverhaltens u.s.w.

Zur Vermeidung dieser Meßungenauigkeiten wird in EP 0 372 037 eine Technik beschrieben, bei der das Gut über eine schräge Rutsche und von dieser auf ein Prall- oder Laufrad geführt wird. Die Rutsche ist mit einem Belastungsumformer zur Erfassung der Schüttgutmasse pro Rutschenlänge ausgestattet. Die Schüttgutgeschwindigkeit (Weg pro Zeit) wird mit dem Prallrad am Ende der Rutsche gemessen, das sich unter der Wirkung des bewegten Gutes dreht. Die Verwendung des Prallrades ist nachteilig, da dieses ein mechanisch bewegtes Element darstellt, das zusätzliche Wartungsarbeiten erfordert. Außerdem können Anbackungen des Gutes am Rad zu falschen Meßresultaten führen. Bei der Meßwertauswertung wird von einer konstanten Geschwindigkeit auf der Rutsche ausgegangen, die nur am Ende der Rutsche gemessen wird. Dabei wird jedoch nicht berücksichtigt, daß auf der Rutsche eine Geschwindigkeitsänderung durch die Beschleunigung des Gutes auf der Rutsche erfolgt. Dieses Problem könnte wiederum nur durch eine zusätzliche Kalibrierung kompensiert werden.

Aus DE PS 44 06 046 ist ein Verfahren zum Messen eines Pulver-Massestromes ohne den Einsatz mechanisch bewegter Elemente bekannt. Dabei wird ein Pulver-Gas-Gemisch durch eine Förderleitung mit einer Geschwindigkeitsmeßvorrichtung und einer Massenmeßvorrichtung geleitet. Die Geschwindigkeitsmeßvorrichtung basiert auf dem Influenzverfahren, das an sich aus den Publikationen von J. B. Gajewski et al. in "Material Science", Bd. 16, S. 113 ff. und in "Electrostatics 1991" (Hrsg. B. C. O'Neill, Inst. Phys. Press, Bristol, S. 159 ff.) und von J. V. Candy in "Signal Processing". A model approach" (McGraw Hill, New York, 1988) bekannt ist. Die Pulverteilchen erfahren bei ihrer Bewegung durch die Förderleitung eine elektrische Aufladung. An der Förderleitung sind mit Abstand zueinander zwei Ringelektroden angebracht, in denen durch die in der Förderleitung bewegten geladenen Pulverteilchen Spiegelladungen induziert werden, die als elektrisches Meßsignal erfaßbar sind. Durch Auswertung von Korrelationen zwischen den Meßsignalen der Ringelektroden kann auf die Geschwindigkeit der Pulverteilchen rückgeschlossen werden.

Die in DE PS 44 06 046 eingesetzte Massenmeßvorrichtung ist zum Messen der Pulvermasse pro Volumeneinheit in einem Abschnitt der Förderleitung ausgelegt und basiert auf einer Substanzmengenmessung mit einem Mikrowellenresonator.

Ein erster Nachteil dieser Technik besteht darin, daß die Massenmeßvorrichtung nur eine relative Massenbestimmung ermöglicht. Zur Erfassung des Pulver-Massestromes müssen die gemessene Geschwindigkeit, die gemessene Pulvermasse pro Volumeneinheit und die Abmessungen der Förderleitung unter Berücksichtigung einer zusätzlichen Kalibrierung verrechnet werden. Die Massenbestimmung unter Verwendung von Mikrowellen ist mit weiteren Nachteilen verbunden. Die Massenbestimmung kann nicht am selben Abschnitt der Förderleitung wie die Geschwindigkeitsmessung erfolgen, da letztere durch den Betrieb des Mikrowellenresonators gestört werden würde. Außerdem ist die Messung mit Mikrowellen extrem von äußeren Randbedingungen abhängig, wie z.B. von der Feuchte des Pulvers. Dies macht eine zusätzliche Prozeßüberwachung und laufende Nachkalibrierung erforderlich.

Generell stellt die Notwendigkeit von Kalibrierungsmessungen bei allen herkömmlichen Techniken einen entscheidenden Nachteil dar, da die Erfassung von Schüttgutströmen in der Praxis möglichst universell und unabhängig von gesonderten Messungen der Schüttgutparameter, wie z.B. Korngrößen, -formen oder -gewichten erfolgen soll.

Die Aufgabe der Erfindung ist es, ein verbessertes Verfahren zum Messen von Schüttgutströmen, insbesondere zum Messen des Massedurchsatzes von fließendem Material, bereitzustellen, mit dem die Nachteile der herkömmlichen Techniken vermieden wird und das insbesondere kalibrationsfrei durchgeführt werden kann. Mit dem Verfahren soll auch eine hohe Meßgenauigkeit und eine Reduzierung des Wartungsaufwandes erreicht werden. Die Aufgabe der Erfindung ist es auch, eine verbesserte Meßeinrichtung für Schüttgutströme, insbesondere eine verbesserte Durchflußwaage für Schüttgutströme anzugeben.

Diese Aufgaben werden durch ein Verfahren gemäß Patentanspruch 1, eine Einrichtung gemäß Patentanspruch 7 oder eine Wägerutsche gemäß Patentanspruch 15 gelöst. Vorteilhafte Ausführungsformen und Anwendungen der Erfindung ergeben sich aus den abhängigen Ansprüchen.

Die Grundidee der Erfindung besteht darin, an fließfähigem Schüttgut in einer Transportleitung die Geschwindigkeitsund Massemessungen gleichzeitig an einer bestimmten Schüttgutmenge durchzuführen. Hierzu wird in eine Transportleitung für fließfähiges Schüttgut eine Wägerutsche integriert, die zur gravimetrischen Massebestimmung am jeweiligen auf der Wägerutsche fließenden Schüttgut ausgelegt ist. An der Wägerutsche oder in der Transportleitung ist ferner mindestens ein Paar von Influenzelektroden einer Geschwindigkeitsmeßvorrichtung angebracht, in denen durch das fließende Schüttgut meßbare Ströme von Influenzladungen erzeugt werden. Aus den zeitlichen Signalverläufen der Ströme wird unter Verwendung eines Korrelationsverfahrens die Geschwindigkeit des Schüttguts ermittelt.

Erfindungsgemäß ist vorgesehen, eine gattungsgemäße Vorrichtung zur Messung der Durchflußmenge an Schüttgütern, wie sie beispielsweise in EP 372 037 beschrieben ist, so weiter zu entwikkeln, daß die Geschwindigkeitsmessung am auf der Wägerutsche befindlichen Material erfolgt. Die Geschwindigkeitsmessung erfolgt entweder direkt an der Schüttgutmenge auf der Wägerutsche oder indirekt an Schüttgutmengen mit Abstand von der Wägerutsche unter Berücksichtigung eines Geschwindigkeitsprofils in der Transportleitung.

Gegenstand der Erfindung ist auch eine Wägerutsche, die simultan zur Masse- und Geschwindigkeitsmessung an über die Wägerutsche fließendem Material ausgelegt ist. Mit der Wägerutsche wird die Masse des auf der Länge der Wägerutsche befindlichen Schüttguts direkt und absolut in Kilogramm je Meter gemessen. Simultan ergibt die Geschwindigkeitsmessung die Schüttgutgeschwindigkeit in Metern je Sekunde. Durch Produktbildung kann unmittelbar die Durchflußmenge als durchfließende Masse pro Zeiteinheit, z.B. in Kilogramm je Stunde, abgeleitet werden.

Die Erfindung besitzt die folgenden Vorteile. Die Erfindung liefert eine Durchflußmengenmessung, die im Unterschied zu allen früheren Techniken kalibrationsfrei aus absoluten Geschwindigkeits- und Massemessungen abgeleitet wird. Die Ermittlung beider Parameter (Geschwindigkeit, Schüttgutmasse) erfolgt gleichzeitig für identisches Schüttgutmaterial. Dies ist ein besonders überraschendes und vorteilhaftes Ergebnis, da man vor der Erfindung davon ausgegangen war, daß die beiden Parameter die Implementierung derart verschiedenartiger Meßprinzipien erfordern, das eine gleichzeitige Messung für einen bestimmten Abschnitt der Transportleitung ausgeschlossen ist. Bei der Entwicklung der erfindungsgemäßen Meßtechnik gelangten die Erfinder zu dem unerwarteten Ergebnis, daß die Influenzmethode zur Geschwindigkeitsmessung ausreichend empfindlich für die Messung an fließfähigem Schüttgütern und ausreichend robust für praktische Anwendungen ist. Es wurde insbesondere festgestellt, daß auch bei Schüttgütern mit relativ großen Teilchengrößen im mm-Bereich die Teilchen z.B. durch Reibung, Stoß oder Bruch elektrostatisch aufgeladen werden und daß sich auch bei relativ geringen Schüttgutgeschwindigkeiten (z.B. im Bereich ab 1 m/s) ausreichend genau meßbare Ströme in den Influenzelektroden ausbilden.

Die erfindungsgemäße Meßtechnik erlaubt auch die genaue Duchflußmengenmessung an unregelmäßig fließendem Schüttgut oder sogar an Schüttgutströmen mit zeitweiligen Unterbrechungen. Die erfindungsgemäße Meßeinrichtung ist äußerst robust gegen Störungen. Bewegte Komponenten, wie z.B. Prall- oder Laufräder, werden vermieden. Die Masse- und Geschwindigkeitsmessungen beeinflussen sich nicht gegenseitig. Mit der Erfindung wird eine Durchflußwaage mit einer neuen und erweiterten Brauchbarkeit geschaffen. Die Wägerutsche mit simultaner Masse- und Geschwindigkeitsmessung kann in eine Transportleitung beliebiger Gestalt eingebaut werden. Die Wägerutsche bildet selbst ein Stück Förderstrecke mit einer Form und Neigung, die zu denen der angrenzenden Abschnitte der Transportleitung identisch sind.

Mit der erfindungsgemäßen Meßtechnik läßt sich die Durchflußmenge mit einer Relativgenauigkeit von 1% und besser ermittelten. Durch den Einsatz einer digitalen Auswertungselektronik kann das System in Förderpausen einen Nullabgleich durchführen, um beispielsweise eine Drift der Massenmeßvorrichtung zu kompensieren.

Weitere Vorteile und Einzelheiten der Erfindung werden aus den im folgenden unter Bezug auf die Zeichnungen beschriebenen Ausführungsbeispielen ersichtlich. Es zeigen:

Figur 1: eine schematische Übersichtsdarstellung der mechanischen Teile einer erfindungsgemäßen Einrichtung zur Durchflußmengenmessung,

Figur 2: eine Illustration der Signalaufnahme bei einem erfindungsgemäßen Verfahren,

Figur 3: Kurvendarstellungen zur Illustration der Ströme von Influenzladungen und deren Korrelation,

Figur 4: Illustrationen zur Position von Influenzelektroden einer erfindungsgemäßen Einrichtung zur Durchflußmengenmessung,

Figur 5: Illustrationen zur Kombination einer erfindungsgemäßen Wägerutsche mit einer Transportleitung, und

Figur 6: Illustrationen verschiedener Förderstreckenquerschnitte.

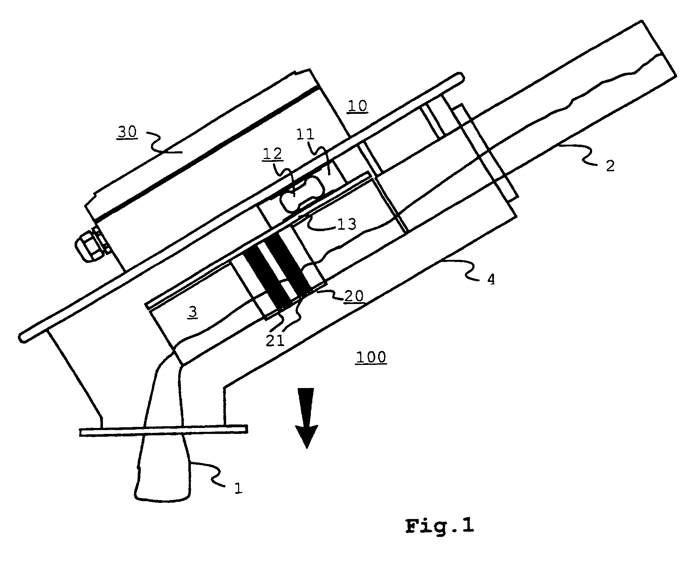

Figur 1 illustriert die Anordnung einer erfindungsgemäßen Einrichtung 100 zum Erfassen der Durchflußmenge fließfähigen Schüttguts 1 am Ende einer Transportleitung 2. Die Einrichtung 100 umfaßt im einzelnen eine Massenmeßvorrichtung 10 mit einer gravimetrischen Wägerutsche 3, eine Geschwindigkeitsmeßvorrichtung 20 mit einem Influenzelektrodenpaar 21 und eine Auswertungsvorrichtung 30, die im einzelnen einen Signalkorrelator, einen Wägeverstärker und eine Rechenvorrichtung zur Ermittlung der Durchflußmenge enthält. Die Einrichtung 100 ist in bzw. an einem durchbrochen gezeichneten Gehäuse 4 angebracht, das anwendungsabhängig ortsfest auf einem Untergrund oder vorzugsweise wie dargestellt am Ende der Transportleitung 2 befestigt ist. Die Wägerutsche 3 ist so gestaltet und im Gehäuse 4 angebracht, daß sie im wesentlichen eine gleichförmige Verlängerung der Förderstrecke der Transportleitung 2 bildet. An der oberen Seite der Wägerutsche 3 ist ein Balken 13 befestigt. Die Wägerutsche 3 ist vorzugsweise aus Segmenten aufgebaut, die mit dem Balken 13 zusammengehalten werden. Die Wägezelle 11 ist an einem Ende mit dem Balken 13 und am anderen Ende mit dem Gehäuse 4 fest verbunden. Sie enthält als Massesensor einen Dehnungsmeßstreifen 12, der in Abhängigkeit von der Masse in der Wägerutsche 3 und damit deren Verbiegung in Pfeilrichtung ein vorbestimmtes Sensorsignal an die Auswertungsvorrichtung 30 liefert. Anstelle des Dehnungsmeßstreifens 12 können alternativ auch andere Massesensoren, z.B. unter Verwendung eines mechanischen Federelements oder des Prinzips der schwingenden Saite oder des Prinzips der magnetischen Kraftkompensation, eingesetzt werden.

Die Wägerutsche 3 trägt das Influenzelektrodenpaar 21 mit zwei voneinander beabstandeten Elektrodenringen 21a, 21b. Die Elektrodenringe 21a, 21b sind in die Wand der Wägerutsche 3 integriert, auf dieser außen fixiert oder auch in einer äußeren Hülse untergebracht, die auf der Außenseite der Wägerutsche 3 beweglich ist. Die Ringelektroden 21a, 21b sind streifenförmige, die Wägerutsche 3 vollständig umgebende metallische Ringe, die beispielsweise aus Kupfer bestehen und eine Dicke von 30 µm bis in den mm-Bereich bzw. eine Breite von rd. 2 cm besitzen. Es können auch mehrere Influenzelektrodenpaare 21 vorgesehen sein, wie dies unten erläutert ist. Die Influenzelektroden müssen nicht zwingend ringförmig die Wägerutsche 3 umgeben. Es sind auch andere, flächige oder streifenförmige Elektrodenformen realisierbar, sofern sie für eine ausreichende Bildung von Ladungssignalen zur Geschwindigkeitsmessung geeignet sind.

Das Schüttgut 1 kann aus beliebigem partikelförmigem, anorganischen oder organischen Material bestehen. Es kann beispielsweise Mineralstoffe oder Kunststoffe mit beliebigen Teilchenformen (Kugelformen, Bruchstücke, Stäbchenformen u. dgl.) umfassen. Typische Teilchengrößen liegen im Bereich oberhalb von 1 µm, vorzugsweise rund 1 mm bis 5 mm. Die Teilchengrößen können auch im cm-Bereich und weit darüberhinaus liegen.

Das Schüttgut 1 bewegt sich unter der Wirkung der Gravitation in der Transportleitung 2 bzw. der Wägerutsche 3 auf dem jeweiligen Boden der Förderstrecke. Hierzu sind die Transportleitung 2 und die Wägerutsche 3 gegenüber der Horizontalen geneigt. Die Neigung oder Steilheit wird anwendungsabhängig, insbesondere in Abhängigkeit von der Fließfähigkeit des Schüttguts, gewählt und liegt beispielsweise im Bereich von 30° bis 45°. Der Transport des Schüttguts 1 erfolgt trägergasfrei rutschend auf dem Boden der Förderstrecke.

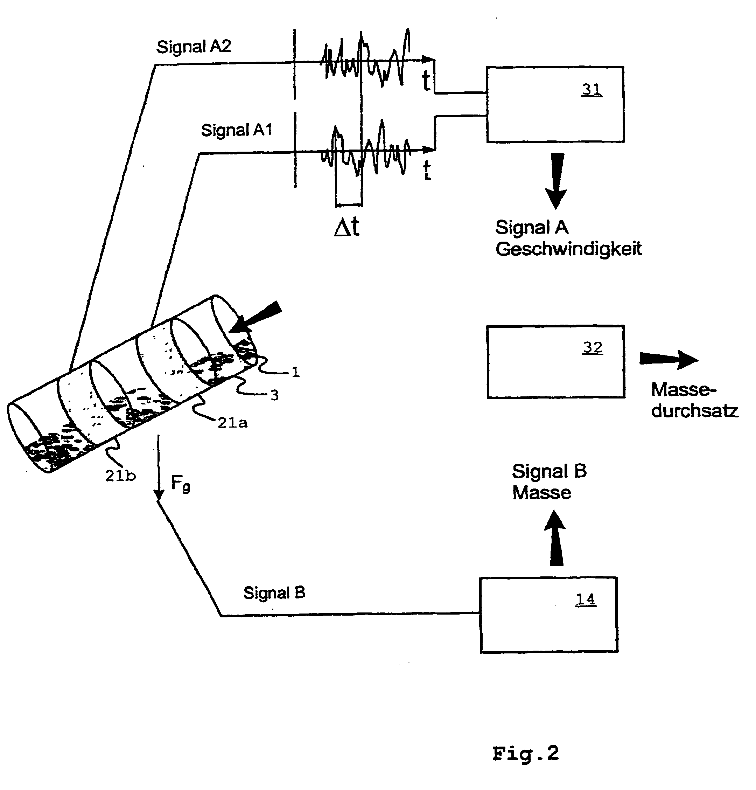

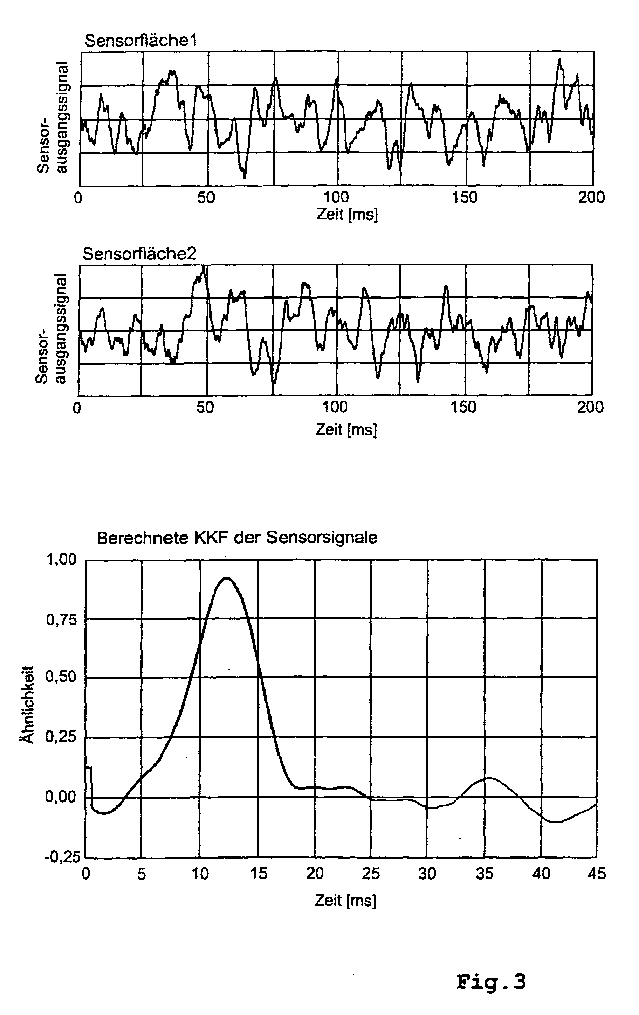

Das Prinzip der Signalaufnahme mit der erfindungsgemäßen Einrichtung 100 wird im folgenden unter Bezug auf die Figuren 2 und 3 erläutert. Figur 2 zeigt schematisch die erfindungsgemäße Wägerutsche 3 mit zwei Elektrodenringen 21a, 21b. Das Schüttgut rutscht in Pfeilrichtung auf den Boden der Wägerutsche 3. Die Geschwindigkeit des Schüttgutstromes wird wie folgt ermittelt.

Der Schüttgutstrom besteht aus Feststoffpartikeln, die sich bei ihrer Bewegung elektrostatisch aufladen. Die elektrostatische Aufladung wird beispielsweise durch Reibung zwischen den Partikeln, Reibung zwischen Partikeln und der Wand der Transportleitung oder durch Bruch oder Stoß verursacht. Die elektrisch geladenen Partikel erzeugen (influenzieren) beim Durchtritt durch einen Metallring oder allgemein bei jeder Bewegung relativ zu einem elektrischen Leiter in diesem eine Spiegelladung. Die Summe der Spiegelladungen liefert ein Ladungssignal, das gegenüber Masse als Stromsignal meßbar ist. Aufgrund von statistischen Schwankungen im Schüttgutstrom ergibt sich im Zeitverlauf ein Stromsignal mit einem statistischen Rauschen. Erfolgt ein Vorbeitritt der elektrisch geladenen Partikel an einem weiteren Metallring oder einer weiteren Metallfläche, so wird wiederum ein Ladungssignal bzw. im zeitlichen Verlauf ein Stromsignal meßbar, das sich ebenfalls durch ein statistisches Rauschen auszeichnet. Das Stromrauschen ist in beiden Fällen in seiner zeitlichen Abfolge ähnlich, wobei jedoch ein Zeitversatz Δt auftritt, der linear von der Schüttgutgeschwindigkeit abhängt. Weitere Einzelheiten des an sich bekannten Influenzprinzips zur Bestimmung von Partikelgeschwindigkeiten werden in der Publikation von K. Dybeck et al. in "Conference Record Of 29th Annual Meeting", IEEE Industrie Application Society, Atlanta 1994, beschrieben.

In Figur 2 ist die Abnahme der Ladungssignale (Signal A1, Signal A2) von den Ringelektroden 21a bzw. 21b illustriert. Die Signale A1, A2 werden an den Korrelator 31 gegeben. Der Korrelator 31 bildet die Kreuzkorrelationsfunktion aus den Signalen A1 und A2 und ermittelt aus dieser den Zeitversatz Δt. Der Zeitversatz entspricht der Lage des Maximums der Kreuzkorrelationsfunktion. Dies ist im einzelnen weiter in Figur 3 illustriert, die im oberen Teil die Ausgangssignale A1 und A2 von den Ringelektroden 21a, 21b und im unteren Teil die Kreuzkorrelationsfunktion KKF illustriert. Aus dem bekannten Abstand 1 der Ringelektroden 21a, 21b und dem Zeitversatz wird die gesuchte Schüttgutgeschwindigkeit v gemäß

$$v = 1/\Delta t$$

ermittelt. Der Abstand 1 zwischen den Ringelektroden 21a, 21b beträgt beispielsweise 30 mm.

Der Korrelator 31 enthält vorzugsweise einen digitalen Signalprozessor, dessen Eingangsgrößen durch Abtasten der analogen Signale A1, A2 geliefert werden. Die Abtastrate wird anwendungsabhängig unter Berücksichtigung einer Minimierung des Fehlers bei der Korrelationsanalyse gewählt. Zur Ermittlung der Kreuzkorrelationsfunktion werden entsprechend den Signalen A1, A2 zwei Datenfolgen mit einer bestimmten Anzahl N von Meßpunkten aufgenommen, die Datenfolgen unter Anwendung einer N-Punkte-FFT in den Frequenzbereich transformiert und einer Faltung unterzogen. Das Faltungsergebnis wird mit einer inversen N-Punkte-FFT in den Zeitbereich rücktransformiert, woraus sich das in Figur 3 (untere Kurve) dargestellte Ergebnis ergibt. Die Geschwindigkeit v wird an die Rechenvorrichtung 32 gegeben.

Der Signalweg zur Ermittlung des Geschwindigkeits-Parameters verläuft somit von den Influenzelektroden 21a, 21b zur Ermittlung der Ladungssignale über einen Vorverstärker (nicht dargestellt) und einen programmierbaren Verstärker zur automatischen Signalanpassung (ebenfalls nicht dargestellt) zum Korrelator 31, der den digitalen Signalprozessor enthält, die Kreuzkorrelationsfunktion und daraus die Geschwindigkeit berechnet. Der programmierbare Verstärkerdient der Signalhöhenoptimierung der Ladungssignale bei sich ändernden Produkteigenschaften oder Massedurchsätzen.

Der Zeitversatz kann alternativ auch mit anderen Signalanalyseverfahren, wie z. B. einer Musteroder Bildauswertung oder Iterationsverfahren, ermittelt werden.

Das Signal für den Masseparameter (Signal B) verläuft direkt von der Wägezelle 11 (siehe Figur 1) der Wägerutsche 3 über einen Wägeverstärker 14 zur Rechenvorrichtung 32.

In der Rechenvorrichtung 32 wird die Durchflußmenge dm/dt aus der Geschwindigkeit und der pro Längeneinheit der Wägerutsche 3 gemessenen Masse M wie folgt berechnet:

$$dm/dt \ [kg/h] = v \ [m/sec] \cdot M \ [kg/m] \cdot 3600$$

Die Rechenvorrichtung 32 ergibt somit ohne zusätzliche Kalibrationsschritte unmittelbar die Durchflußmenge. Die jeweils berechnete quantitative Größe für dm/dt kann einer weiteren Auswertung, einer Anzeige oder einer Systemsteuerung als Eingangsgröße z.B. für einen Förderer zugeführt werden.

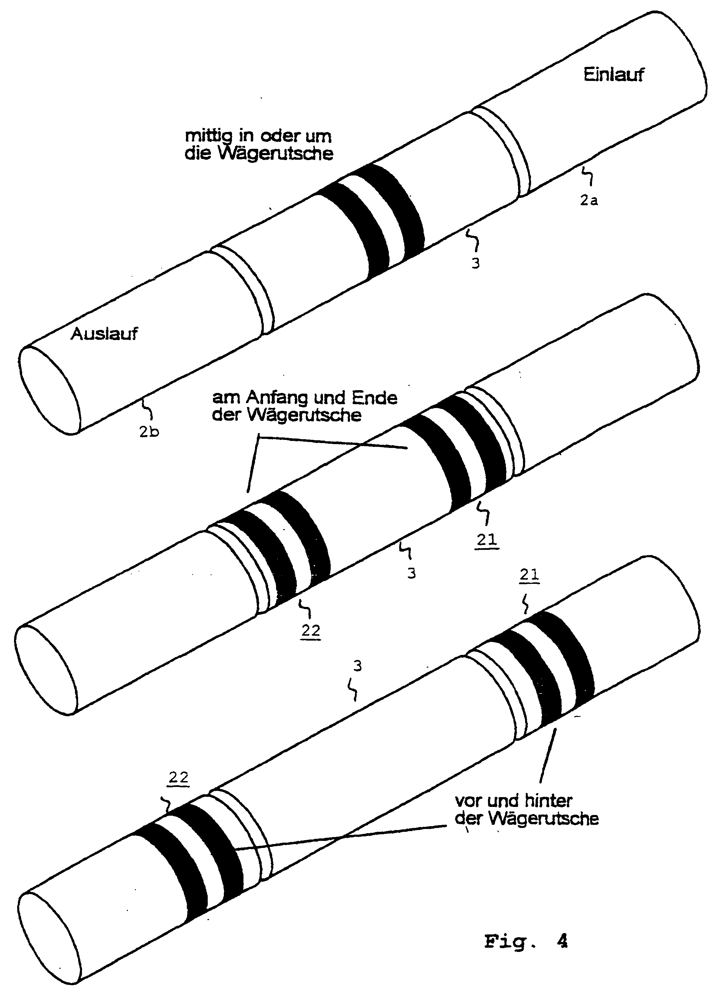

Figur 4 illustriert verschiedene Ausführungsformen der E-lektrodenpositionierung an der Wägerutsche 3. Die Ringelektroden 21a, 21b, die ersatzweise auch nicht-umlaufende Elektrodenstücke nahe des in Betriebsposition unteren Teils der Wägerutsche sein können, bilden jeweils ein Influenzelektrodenpaar 21. Jedes Influenzelektrodenpaar 21 ist außen um die Wägerutsche verlaufend befestigt oder in die Wand der Wägerutsche eingebettet. Im ersteren Fall muß die Wägerutsche aus einem elektrisch isolierenden Material bestehen. Beim Einkleben oder Einbetten der Influenzelektroden in die Wägerutsche ist dies nicht erforderlich. Vorzugsweise wird ein segmentierter Aufbau gewählt, bei dem sich Rutschen- und Elektrodensegmente abwechseln.

Im Unterschied zu Figur 1 zeigt Figur 4 die Wägerutsche 3 zwischen dem Einlauf 2a und dem Auslauf 2b der im übrigen nicht gezeigten Transportleitung. Im obersten Teilbild ist das Influenzelektrodenpaar 21 in axialer Richtung mittig an der Wägerutsche 3 angebracht. Bei der abgewandelten Ausführungsform entsprechend dem mittleren Bild in Figur 4 sind zwei Influenzelektrodenpaare 21, 22 am Anfang bzw. Ende der Wägerutsche 3 vorgesehen. Diese Ausführungsform besitzt den Vorteil, daß die Geschwindigkeit des Schüttguts mit erhöhter Genauigkeit ermittelt werden kann. Da die Geschwindigkeit des Schüttguts während des Fließens über Wägerutsche 3 unter Wirkung.der Gravitationskraft noch steigt, können mit den zwei Influenzelektrodenpaaren 21, 22 zwei Geschwindigkeitswerte und aus diesen ein mittlerer Geschwindigkeitswert ermittelt werden. Zur Aufnahme von Geschwindigkeitsprofilen entlang der Wägerutsche und/oder zur Verbesserung der Geschwindigkeitsmessung können auch noch mehr Influenzelektrodenpaare vorgesehen sein.

Im untersten Teil von Figur 4 ist eine weitere Ausführungsform der Erfindung illustriert, bei der zwei Influenzelektrodenpaare 21, 22 am Ende des Einlaufs 2a bzw. am Anfang des Auslaufs 2b angeordnet sind. Aus den Abständen der Influenzelektrodenpaare 21 bzw. 22 von der Wägerutsche 3 kann unter Annahme eines vorbestimmten Geschwindigkeitsprofils des Schüttguts die Geschwindigkeit in der Wägerutsche 3 ermittelt werden. Das Geschwindigkeitsprofil ist beispielsweise ein lineares Profil, d.h. die Geschwindigkeit des Schüttguts nimmt in Transportrichtung linear zu. Das Geschwindigkeitsprofil kann aber auch komplizierter oder einfacher sein. Je nach Material, Steilheit und Länge der Förderstrecke können ein Abbremsen oder bei Gleichgewicht aus Reibung und Gravitation eine konstante Geschwindigkeit des Schüttguts auftreten.

Die Ausführungsform gemäß Fig. 4 (unten) besitzt Vorteile in Bezug auf den vereinfachten mechanischen Aufbau der Wägerutsche und die Vermeidung einer Verdrahtung an dieser. Allerdings muß bei dieser Gestaltung ein Auslauf vorgesehen sein.

Gemäß einer weiteren, nicht dargestellten Ausführungsform könnte auch ein einziges Influenzelektrodenpaar außerhalb der Wägerutsche vorgesehen sein, das unter Berücksichtigung des Abstandes von der Wägerutsche und des angenommenen Geschwindigkeitsprofils oder einer auf der Förderstrecke ausgebildeten Konstantgeschwindigkeit wiederum einen Geschwindigkeitswert für das Schüttgut in der Wägerutsche ergibt.

Diese Ausführungsform ist jedoch durch eine geringere Genauigkeit gekennzeichnet.

Es wird betont, daß auch die Ausführungsformen der Erfindung mit Influenzelektrodenpaaren außerhalb der Wägerutsche die simultane Geschwindigkeits- und Massemessung für identisches Schüttgutmaterial erlauben. Die Interpolation auf der Grundlage von Geschwindigkeitsprofilen ist bei fließfähigem Schüttgut genügend genau, um von den Geschwindigkeitswerten außerhalb der Wägerutsche auf die Geschwindigkeit auf der Wägerutsche Rückschlüsse ziehen zu können.

Eine in der Praxis realisierte Meßeinrichtung zur Messung an Kunststoffgranulat mit einer mittleren Korngröße von 2 mm und einem Durchsatz von rd. 0.5 bis 2 t/h besitzt z. B. die folgenden Eigenschaften. Der Aufbau entspricht der Gestaltung von Fig. 4 (oben). Die Wägerutsche besitzt eine Länge von 200 mm und eine Neigung gegenüber der Horizontalen von 30°. Der Rohrdurchmesser beträgt 50 mm. Das Granulat besitzt eine typische Geschwindigkeit von rd. 1.7 m/s. Bei maximalem Durchsatz beträgt die Masse M auf der Wägerutsche rd. 65 g / 200 mm.

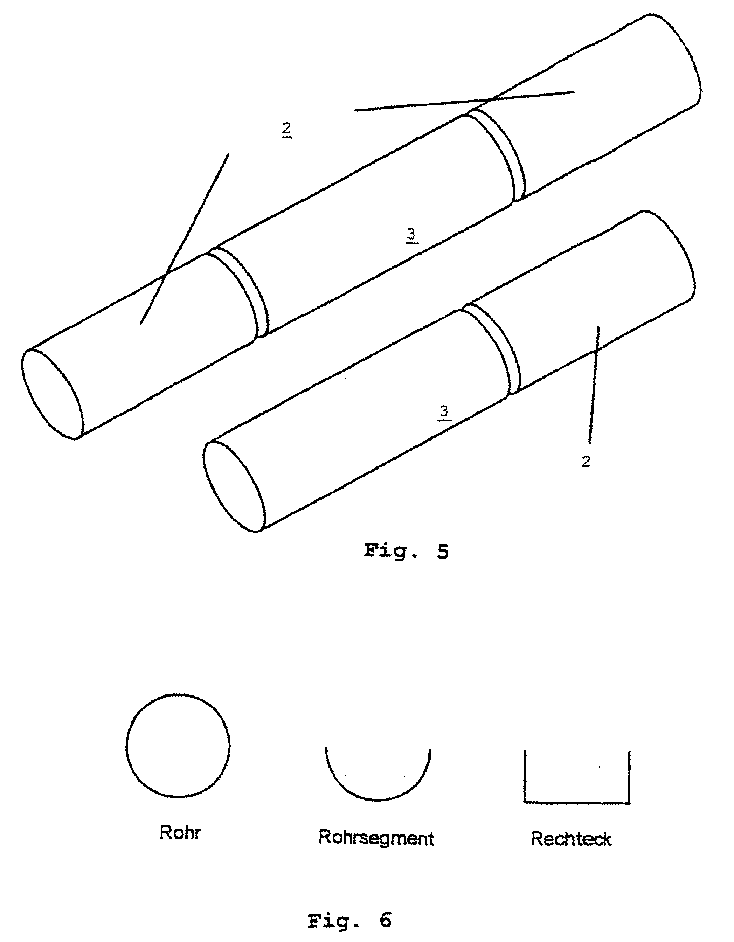

Die Figuren 5 und 6 illustrieren verschiedene Gestaltungen der Anordnung der Wägerutsche 3 in Bezug auf die Transportleitung 2 bzw. des Profils der Transportleitung 2 und der Wägerutsche 3. Die erfindungsgemäße Wägerutsche 3 kann in die Transportleitung 2 integriert sein (Figur 5, oberer Teil) oder am Ende der Transportleitung 2 vorgesehen sein. In jedem Fall ist das Querschnittsprofil der Wägerutsche genau an das Querschnittsprofil der Transportleitung angepaßt, wobei jedoch die Wägerutsche 3 berührungslos angeordnet ist. Ein Spalt zwischen der Wägerutsche 3 und den jeweils benachbarten Teilen der Transportleitung 2 besitzt meist eine charakteristische Dimension, die geringer ist als die typische Teilchengröße des fließenden Schüttguts. Beispielsweise besitzt der Spalt bei Granulatschüttgut mit einer Teilchengröße im Bereich von 2 mm eine Breite von 1 mm. Bei großen Durchsätzen tritt im Schüttgutstrom eine Kraftwirkung wie ein Sog auf, die insbesondere bei der Förderung von Pulvern verhindert, daß sich der Spalt zusetzt. Die Spaltbreite kann somit auch größer als die geförderten Teilchen sein.

Die Transportleitung und die Wägerutsche besitzen einen geschlossenen oder einen nach oben offenen Querschnitt, wie dies in Figur 6 illustriert ist. Eine bevorzugte geschlossene Querschnittsform ist die Rohrform. Als offene Formen können beispielsweise ein Rohrsegment oder eine Rechteckform gebildet werden. Weitere Abwandlungen sind möglich, wobei eine Querschnittsform derart bevorzugt wird, daß in einem in Betriebsposition unteren Scheitel der Förderstrecke das Schüttgut konzentriert wird. Die Querschnittsform kann auch dreieckig oder durch Kombination der genannten Formen gebildet sein.

Die Wägerutsche 3 kann hängend oder von unten gestützt angeordnet sein, wobei die hängende Anordnung bevorzugt wird, da die Wägezelle 11 (siehe Figur 1) vor gegebenenfalls austretendem Schüttgut geschützt wird und den ausgetretenen Schüttgutstrom nicht behindert und ferner kurze, störungsarme Kabelwege zur Signalübertragung ermöglicht werden.

## Patentansprüche

1. Verfahren zum Erfassen der Durchflußmenge fließfähigen Schüttguts (1) durch eine Transportleitung (2), bei dem eine Geschwindigkeitsmessung und eine Massemessung vorgesehen sind, wobei die Massemessung gravimetrisch mit einer Wägerutsche (3) erfolgt,
   **dadurch gekennzeichnet, daß**
   die Geschwindigkeitsmessung simultan zur Massemessung für jeweils auf der Wägerutsche befindliches Schüttgut unter Verwendung mindestens eines Influenzelektrodenpaares (21, 22) erfolgt, und die Durchflußmenge kalibrationsfrei direkt aus der Geschwindigkeit und der Masse des auf der Wägerutsche (3) fließenden Schüttguts (1) ermittelt wird.

2. Verfahren gemäß Anspruch 1, bei dem die Massemessung mit einer hängenden oder aufliegenden Wägerutsche (3) erfolgt.

3. Verfahren gemäß Anspruch 1 oder 2, bei dem mehrere Influenzelektrodenpaare (21, 22) vorgesehen sind und mit diesen mehrere Geschwindigkeitsmessungen erfolgen und die Geschwindigkeit des Schüttguts (1) der Wägerutsche (3) aus den Geschwindigkeitsmessungen abgeleitet wird.

4. Verfahren gemäß einem der Ansprüche 1 bis 3, bei dem das Schüttgut partikelförmige Feststoffe mit typischen Teilchengrößen im Bereich von 1 μm bis 1000 mm umfaßt.

5. Verfahren gemäß einem der Ansprüche 1 bis 4, bei dem die Durchflußmenge (dm/dt) aus der gemessenen Masse (M) und der gemessenen Geschwindigkeit (v) gemäß $dm/dt = v \cdot M$ ermittelt wird.

6. Verfahren gemäß einem der Ansprüche 1 bis 5, bei dem zur Geschwindigkeitsmessung eine Korrelationsanalyse der Ladungssignale der Influenzelektroden jedes Influenzelektrodenpaares (21, 22) erfolgt.

7. Einrichtung (100) zum Erfassen der Durchflußmenge fließfähigen Schüttguts (1) durch eine Transportleitung (2), die umfaßt:

- eine Massemeßvorrichtung (10), die zur Wägung des auf einer Wägerutsche (3) befindlichen Schüttguts (1) ausgelegt ist,
- eine Geschwindigkeitsmeßvorrichtung (20), und
- eine Auswertungsvorrichtung (30),

**dadurch gekennzeichnet, daß**
die Geschwindigkeitsmeßvorrichtung (20) mindestens ein Influenzelektrodenpaar (21, 22) umfaßt, das zur Bereitstellung von Ladungssignalen (A1, A2) ausgelegt ist, deren relativer zeitlicher Verlauf charakteristisch für die Geschwindigkeit des Schüttguts (1) in der Wägerutsche (3) ist, und die Auswertungsvorrichtung (30) mit der Massemeßvorrichtung (10) und Geschwindigkeitsmeßvorrichtung (20) verbunden und dazu ausgelegt ist, aus den von den Masse- und Geschwindigkeitsmeßvorrichtungen (10, 20) gelieferten Meßwerten direkt die Durchflußmenge des Schüttguts (1) zu ermitteln.

8. Einrichtung gemäß Anspruch 7, bei der die Wägerutsche (3) hängend oder aufliegend angeordnet ist.

9. Einrichtung gemäß Anspruch 7 oder 8, bei der die Wägerutsche (3) am Ende einer Transportleitung (2) oder in einer Lücke zwischen zwei Transportleitungsabschnitten (2a, 2b) angeordnet ist.

10. Einrichtung gemäß einem der Ansprüche 7 bis 9, bei der das mindestens eine Influenzelektrodenpaar (21, 22) an der Wägerutsche (3), auf deren Außenseite oder in deren Wand integriert, angebracht ist.

11. Einrichtung gemäß einem der Ansprüche 7 bis 10, bei der jedes Influenzelektrodenpaar (21, 22) aus zwei Ringelektroden besteht, die radial um die Wägerutsche (3) verlaufen.

12. Einrichtung gemäß einem der Ansprüche 7 bis 10, bei der jedes Influenzelektrodenpaar (21, 22) Elektrodenstücke umfaßt, die im Bodenbereich der Wägerutsche (3) angeordnet sind.

13. Einrichtung gemäß einem der Ansprüche 7 bis 9, bei der mindestens ein Influenzelektrodenpaar (21, 22) an der Transportleitung (2) angebracht ist.

14. Einrichtung gemäß einem der Ansprüch 7 bis 13, bei der die Massenmeßvorrichtung (10) eine Wägezelle (11) und einen Dehnungsmeßstreifen (12) enthält, wobei die Wägezelle (11) mit dem Dehnungsmeßstreifen (12) an einem Ende mittels eines Balkens (13) an der Wägerutsche (3) und am anderen Ende ortsfest an einem Gehäuse (4) befestigt ist.

15. Wägerutsche zur gravimetrischen Wägung von fließendem Schüttgut (1), die mit einer Massenmeßvorrichtung (10) und einer Geschwindigkeitsmeßvorrichtung (20) versehen ist,
**dadurch gekennzeichnet, daß**
die Geschwindigkeitsmeßvorrichtung (20) mindestens ein Influenzelektrodenpaar (21, 22) zur Erfassung der Geschwindigkeit des Schüttguts auf der Wägerutsche (3) umfaßt.

16. Wägerutsche gemäß Anspruch 15, bei der ein Influenzelektrodenpaar (21) in axialer Richtung in der Mitte der Wägerutsche (3) angebracht ist.

17. Wägerutsche gemäß Anspruch 15, bei der zwei Influenzelektrodenpaare (21, 22) an den Enden der Wägerutsche (3) angebracht sind (3).

18. Wägerutsche gemäß einem der Ansprüche 15 bis 17, bei der die Influenzelektrodenpaare auf der äußeren Wand der Wägerutsche (3) aufgebracht oder in die Wand der Wägerutsche (3) integriert sind.

19. Wägerutsche gemäß Anspruch 18, die einen segmentartigen Aufbau besitzt.

20. Verwendung eines Verfahrens, einer Einrichtung oder einer Wägerutsche gemäß einem der vorliegenden Ansprüche zum Erfassen der Durchflußmenge fließfähiger Schüttgüter.

**Claims**

1. A method for registering the flow-through quantity of bulk material (1) flowing freely through a transport line (2), which method provides for both speed measurement and mass measurement, wherein mass measurement takes place gravimetrically using a weighing chute (3),
**characterised in that**
the speed measurement and the mass measurement take place simultaneously for bulk material which is present on the weighing chute, with the use of at least one pair (21, 22) of influence electrodes, and **in that**
the flow-through quantity is determined without calibration, directly from the speed and the mass of the bulk material (1) flowing on the weighing chute (3).

2. The method according to claim 1 in which the mass measurement takes place with a suspended or supported weighing chute (3).

3. The method according to claim 1 or 2 in which several pairs (21, 22) of influence electrodes are provided and through their use, several instances of speed measurement take place and the speed of the bulk material (1) on the weighing chute (3) is derived from said instances of speed measurement.

4. The method according to one of claims 1 to 3, in which the bulk material comprises particle-shaped solid matter with a typical particle size ranging from 1 µm to 1000 mm.

5. The method according to one of claims 1 to 4, in which the flow-through quantity (dm/dt) is calculated from the measured mass (M) and the measured speed (v) according to dm/dt = v · M.

6. The method according to one of claims 1 to 5, in which, for measuring the speed, a correlation analysis of the charge signals of the influence electrodes of each pair (21, 22) of influence electrodes, takes place.

7. A device (100) for registering the flow-through quantity of bulk material (1) flowing freely through a transport line (2), comprising:

   - a mass measuring device (10) designed for weighing the bulk material (1) present on a weighing chute (3);
   - a speed measuring device (20); and
   - an evaluation device (30),

   **characterised in that**
   the speed measuring device (20) comprises at least one pair (21, 22) of influence electrodes which is designed to provide charge signals (A1, A2) whose relative behaviour over time is characteristic of the speed of the bulk material (1) on the weighing chute (3); and
   the evaluation device (30) is connected with the mass measuring device (10) and the speed measuring device (20) and is designed to determine the flow-through quantity of the bulk material (1) directly from the measured values obtained by the mass measuring and the speed measuring devices (10, 20).

8. The device according to claim 7, in which the weighing chute (3) is arranged so as to be suspended or supported from below.

9. The device according to claim 7 or 8, in which the weighing chute (3) is arranged at the end of a transport line (2) or in a gap between two sections (2a, 2b) of a transport line.

10. The device according to one of claims 7 to 9, in which the pair (21, 22) of influence electrodes of which there is at least one, is attached to the outside of the wall of the weighing chute (3) or accommodated in the exterior wall of said weighing chute.

11. The device according to one of claims 7 to 10, in which each pair (21, 22) of influence electrodes comprises two annular electrodes which radially encompass the weighing chute (3).

12. The device according to one of claims 7 to 10, in which each pair (21, 22) of influence electrodes comprises electrode pieces which are arranged in the bottom region of the weighing chute (3).

13. The device according to one of claims 7 to 9, in which at least one pair (21, 22) of influence electrodes is attached to the transport line (2).

14. The device according to one of claims 7 to 13, in which the mass measuring device (10) comprises a weighing cell (11) and a wire strain gauge (12) wherein the weighing cell (11) with the wire strain gauge (12) by means of a beam (13) is firmly attached at one end to the weighing chute (3), and at the other end to a housing (4).

15. A weighing chute for gravimetric weighing of free-flowing bulk material (1), comprising a mass measuring device (10) and a speed measuring device (20),
   **characterised in that**
   the speed measuring device (20) comprises at least one pair (21, 22) of influence electrodes for registering the speed of the bulk material in the weighing chute (3).

16. The weighing chute according to claim 15, in which a pair (21) of influence electrodes is attached in axial direction in the middle of the weighing chute (3).

17. The weighing chute according to claim 15, in which two pairs (21, 22) of influence electrodes are attached at the ends of the weighing chute (3).

18. The weighing chute according to one of claims 15 to 17, in which the pairs of influence electrodes are attached at the exterior wall of the weighing chute (3) or integrated in the wall of the weighing chute (3).

19. The weighing chute according to claim 18, which is of segment-like design.

20. The use of a method, a device, or a weighing chute according to one of the preceding claims, for registering the flow-through quantity of free-flowing bulk materials.

**Revendications**

1. Procédé de mesure du débit de produit en vrac (1) fluide par une conduite de transport (2), dans lequel sont prévues une mesure de la vitesse et une mesure de la masse, sachant que la mesure de la masse a lieu de façon gravimétrique à l'aide d'un couloir de pesée (3),

   **caractérisé en ce que**,

   la mesure de la vitesse a lieu simultanément à la mesure de la masse pour le produit en vrac se trouvant à chaque fois dans le couloir de pesée à l'aide d'un couple d'électrodes d'influence (21, 22), et

   le débit est déterminé sans calibrage directement à partir de la vitesse et de la masse du produit en vrac (1) s'écoulant dans le couloir de pesée (3).

2. Procédé selon la revendication 1, dans lequel la mesure de la masse est effectuée avec un couloir de pesée (3) en suspension ou en applique.

3. Procédé selon la revendication 1 ou 2, dans lequel sont prévus plusieurs couples d'électrodes d'influence (21, 22), grâce auxquels sont réalisées plusieurs mesures de la vitesse, et la vitesse du produit en vrac (1) dans le couloir de pesée (3) est déduite des mesures de vitesse.

4. Procédé selon une des revendications 1 à 3, dans lequel le produit en vrac comprend des matières solides en forme de particules avec des grandeurs de particules caractéristiques situées dans la gamme de 1 µm à 1000 mm.

5. Procédé selon une des revendications 1 à 4, dans lequel le débit (dm/dt) est déterminé à partir de la masse mesurée (M) et de la vitesse mesurée (v) d'après dm/dt = vxM.

6. Procédé selon une des revendications 1 à 5, dans lequel une analyse de corrélation des signaux de chargement des électrodes d'influence de chaque couple d'électrodes d'influence (21, 22) a lieu pour la mesure de la vitesse.

7. Dispositif (100) de mesure du débit de produit en vrac (1) fluide par une conduite de transport (2) comprenant :

   - un dispositif de mesure de la masse (10) qui est conçu pour la pesée du produit en vrac (1) se trouvant dans un couloir de pesée (3),
   - un dispositif de mesure de la vitesse (20), et
   - un dispositif d'évaluation (30),

      **caractérisée en ce que**,
      le dispositif de mesure de la vitesse (20) comprend au moins un couple d'électrodes d'influence (21, 22) destiné à fournir des signaux de chargement (A1, A2) dont le tracé temporel relatif est caractéristique de la vitesse du produit en vrac (1) dans le couloir de pesée (3), et

   le dispositif d'évaluation (30) est relié au dispositif de mesure de la masse (10) et au dispositif de mesure de la vitesse (20), et est conçu de façon à déterminer directement le débit du produit en vrac (1) à partir des valeurs de mesure fournies par les dispositifs de mesure de la masse et de la vitesse (10, 20).

8. Dispositif selon la revendication 7, dans lequel le couloir de pesée (3) est disposé en suspension ou en applique.

9. Dispositif selon la revendication 7 ou 8, dans lequel le couloir de pesée (3) est disposé à l'extrémité d'une conduite de transport (2) ou dans un espace situé entre deux tronçons de conduite de transport (2a, 2b).

10. Dispositif selon une des revendications 7 à 9, dans lequel le au moins un couple d'électrodes d'influence (21, 22) est posé contre le couloir de pesée (3) en étant intégré à sa face externe ou dans la paroi de celle-ci.

11. Dispositif selon une des revendications 7 à 10, dans lequel chaque couple d'électrodes d'influence (21, 22) est composé de deux électrodes annulaires qui s'étendent radialement autour du couloir de pesée (3).

12. Dispositif selon une des revendications 7 à 10, dans lequel chaque couple d'électrodes d'influence (21, 22) comprend des morceaux d'électrodes qui sont disposés dans la zone de fond du couloir de pesée (3).

13. Dispositif selon une des revendications 7 à 9, dans lequel au moins un couple d'électrodes d'influence (21, 22) est posé contre la conduite de transport (2).

14. Dispositif selon une des revendications 7 à 13, dans lequel le dispositif de mesure de la masse (10) contient une cellule de pesée (11) et une jauge extensométrique (12), sachant que la cellule de pesée (11) avec la jauge extensométrique (12) est fixée à une extrémité au moyen d'une barre (13) sur le couloir de pesée (3) et à l'autre extrémité de façon stationnaire sur un boîtier (4).

15. Glissière de pesée pour la pesée gravimétrique de produit en vrac (1) fluide, laquelle est dotée d'un dispositif de mesure de la masse (10) et d'un dispositif de mesure de la vitesse (20),

**caractérisée en ce que**

le dispositif de mesure de la vitesse (20) comprend au moins un couple d'électrodes d'influence (21, 22) destiné à la mesure de la vitesse du produit en vrac dans le couloir de pesée (3).

16. Glissière de pesée selon la revendication 15, dans laquelle un couple d'électrodes d'influence (21) est posé dans le sens axial au centre du couloir de pesée (3).

17. Glissière de pesée selon la revendication 15, dans laquelle deux couples d'électrodes d'influence (21, 22) sont posés aux extrémités du couloir de pesée (3).

18. Glissière de pesée selon une des revendications 15 à 17, dans laquelle les couples d'électrodes d'influence sont posés sur la paroi externe du couloir de pesée (3) ou sont intégrés à la paroi du couloir de pesée (3).

19. Glissière de pesée selon la revendication 18 possédant une construction en segments.

20. Utilisation d'un procédé, d'une installation ou d'un couloir de pesée selon une des revendications précédentes pour la mesure du débit de produits en vrac fluides.

Fig.1

Signal A2

31

t

Signal A1

t

Δt

Signal A
Geschwindigkeit

32

Massedurchsatz

1

3

21a

21b

$F_g$

Signal B
Masse

Signal B

14

Fig.2

Sensorfläche1

Sensorausgangssignal

0          50         100         150         200

Zeit [ms]

Sensorfläche2

Sensorausgangssignal

0          50         100         150         200

Zeit [ms]

Berechnete KKF der Sensorsignale

Ähnlichkeit

1,00

0,75

0,50

0,25

0,00

-0,25

0     5     10     15     20     25     30     35     40     45

Zeit [ms]

Fig.3

mittig in oder um
die Wägerutsche

Einlauf

2a

3

Auslauf

2b

am Anfang und Ende
der Wägerutsche

21

3

21

22

3

22

vor und hinter
der Wägerutsche

Fig. 4

Fig. 5

Rohr          Rohrsegment          Rechteck

Fig. 6